(19) Europäisches Patentamt

European Patent Office

Office européen des brevets

(11) Veröffentlichungsnummer: **0 172 134**
**B1**

(12) **EUROPÄISCHE PATENTSCHRIFT**

(45) Veröffentlichungstag der Patentschrift:
09.03.88

(51) Int. Cl.⁴: **F 16 B 13/14**

(21) Anmeldenummer: **85810322.9**

(22) Anmeldetag: **15.07.85**

(54) Siebhülse zur Aufnahme von mittels aushärtender Massen befestigbaren Verankerungselementen.

(30) Priorität: **16.07.84 DE 3426174**

(43) Veröffentlichungstag der Anmeldung:
**19.02.86 Patentblatt 86/8**

(45) Bekanntmachung des Hinweises auf die Patenterteilung:
**09.03.88 Patentblatt 88/10**

(84) Benannte Vertragsstaaten:
**AT CH DE FR GB LI**

(56) Entgegenhaltungen:
**EP - A - 0 005 969**
**DE - A - 2 061 025**
**DE - A - 2 615 316**
**DE - A - 3 225 051**
**DE - C - 251 798**

(73) Patentinhaber: **HILTI Aktiengesellschaft,**
**FL-9494 Schaan (LI)**

(72) Erfinder: **Hügel, Robert, Eichendorffstrasse 9,**
**D-8912 Kaufering (DE)**
Erfinder: **Kolb, Sven, Bregenzerstrasse 33,**
**A-6900 Bregenz (DE)**
Erfinder: **Leibhard, Erich, Bauweberstrasse 2,**
**D-8000 München 71 (DE)**

(74) Vertreter: **Wildi, Roland, Hilti Aktiengesellschaft**
**Patentabteilung, FL-9494 Schaan (LI)**

ACTORUM AG

### Beschreibung

Die Erfindung betrifft eine Siebhülse zur Aufnahme von mittels aushärtender Massen befestigbaren Verankerungselementen, aus Drahtgewebe, mit einem einführrichtungsseitig geschlossenen Schaft und einem den Durchmesser des Schaftes überragenden Flansch am gegenüberliegenden offenen Ende.

Zur Herstellung von Verankerungen in Hohlkammern aufweisendem Untergrund, wie Mauerwerk, werden in vorgefertigte Aufnahmeöffnungen im Untergrund Siebhülsen eingeführt und in diese unter Druck eine aushärtbare Masse eingebracht. Aufgabe dieser Siebhülsen ist es, einerseits die Menge der eingebrachten Masse zu begrenzen und andererseits unter Austreten durch die wandungsseitigen Öffnungen mittels eines Teils der Masse einen Hintergriff in den Hohlkammern des Untergrunds zu schaffen. Nach dem Einbringen der Masse wird in die Siebhülse ein Verankerungselement — eine Gewindestange oder eine Ankerhülse mit Gewinde — eingesetzt. Das Verankerungselement wird von der aushärtenden Masse unter Zwischenlage der Siebhülse im Untergrund festgelegt.

Eine bekannte Siebhülse aus Drahtgewebe weist einen einführrichtungsseitig geschlossenen Schaft und am gegenüberliegenden offenen Ende des Schaftes einen diesen überragenden Flansch auf. Letzterer dient als Anschlag, um das Einführen der Siebhülse in die Aufnahmeöffnung zu begrenzen. Nach dem Einbringen der aushärtbaren Masse wirkt auf die Siebhülse ein Staudruck entgegen der Einführrichtung ein. Dies hat zur Folge, dass nach dem Entnehmen der angesetzten Einbringvorrichtung für die Masse die Siebhülse teilweise aus der Aufnahmeöffnung ausgestossen wird, bevor eine Aushärtung der Masse und damit deren formschlüssige Festlegung im Untergrund stattfindet. Bei Setzrichtung der Siebhülse vertikal nach oben muss diese auch an einem durch die Schwerkraft bedingten Entfallen gehindert werden, was umständlicher Manipulationen bedarf.

Diesen Nachteilen wird durch eine weitere bekannte Siebhülse begegnet, welche sich aus einem aus Drahtgewebe bestehenden hohlen, einführrichtungsseitig geschlossenen Schaft und einem auf diesen am gegenüberliegenden offenen Ende aufgesetzten Flansch aus Kunststoff zusammensetzt. Um eine selbsttätige Lagefixierung der Siebhülse während des Setzvorganges zu gewährleisten, ist dem Flansch ein ringförmiger Abschnitt mit kleinerem Durchmesser und sich in Einführrichtung verjüngender kegeliger Aussenkontur zugeordnet, der über eine Länge von etwa 10% des Schaftes diesen in Einführrichtung übergreift. Beim Einführen der Siebhülse in die Aufnahmeöffnung verkeilt sich der ringförmige Abschnitt mit dessen kegeliger Aussenkontur im nach aussen herstellungsbedingt sich erweiternden Mündungsbereich der Aufnahmeöffnung. Diese Verkeilung unterbindet ein Ausstossen der Siebhülse durch die unter Staudruck stehende noch nicht ausgehärtete Masse bzw. ein Entfallen der allenfalls vertikal nach oben gesetzten Siebhülse vor deren Festlegung durch die Masse.

Ein erheblicher Nachteil dieser bekannten, funktionell entsprechenden Siebhülse ist deren grosser Herstellungsaufwand. Dieser ergibt sich daraus, dass zuerst der aus Drahtgewebe bestehende Schaft fertigzustellen ist und anschliessend der gesondert gefertigte Flansch aus Kunststoff mit dem Schaft lagefest verbunden werden muss.

Der Erfindung liegt die Aufgabe zugrunde, eine Siebhülse zu schaffen, die unter Überwindung des Staudruckes und des Eigengewichtes im Untergrund ausreichend festlegbar ist und sich zudem durch wirtschaftliche Herstellbarkeit auszeichnet.

Erfindungsgemäss wird die Aufgabe dadurch gelöst, dass der dem Flansch benachbarte Bereich des Schaftes die Aussenkontur des Schaftes überragende Vorsprünge aus Drahtgewebe aufweist.

Der Schaft, der Flansch und die Vorsprünge bestehen somit aus Drahtgewebe. Diese materialmässige Einheitlichkeit erlaubt eine kostengünstige Herstellung der Siebhülse. Die Vorsprünge gewährleisten ein zuverlässiges Festlegen der Siebhülse in der Aufnahmeöffnung.

Die Herstellungskosten der Siebhülse lassen sich weiter senken, wenn die Vorsprünge einstückig mit dem Schaftbereich verbunden sind. Die Siebhülse lässt sich so in einfacher Weise aus einem entsprechenden Zuschnitt aus Drahtgewebe im Biegeverfahren in seine endgültige Form bringen, ohne dass es zeitaufwendiger weiterer Montage- bzw. Kompletierungsschritte bedarf.

Einfachheitshalber können die Vorsprünge beispielsweise durch eine oder mehrere Ausprägungen in dem dem Flansch benachbarten Bereich des Schaftes geschaffen sein. Solche Ausprägungen können beispielsweise buckelartig oder als umlaufende Erhebung gestaltet sein. Vorzugsweise sind die Vorsprünge durch einen durch Faltung gebildeten Wulst geschaffen. Die Faltung kann beispielsweise durch innen- oder aussenseitiges Umstülpen der flanschseitigen Randzone des Zuschnittes gebildet werden. Ebenso ist es möglich, durch Axialverkürzung des Schaftes eine entsprechende Faltung zur Erzielung eines Wulstes zu erreichen. Zweckmässig weist der Wulst eine in Einführrichtung sich der Aussenkontur des Schaftes nähernde Neigung auf.

Nach einem weiteren Vorschlag der Erfindung sind die Vorsprünge als axial verlaufende Rippen ausgebildet. Die Rippen können wiederum durch die flanschseitige Randzone des Zuschnittes gebildet sein.

Einfachheitshalber sind in Weiterbildung der Erfindung die Rippen durch hochgebogene Wandungsteile gebildet. Diese stehen nach der Art von Ohren tangential von der Aussenkontur des Schaftes ab. Über den Umfang des Schaftes sind zweckmässig gleichmässig verteilt mehrere Rippen vorgesehen. Um eine Verdrehsperre der Spreizhülse in beiden Drehrichtungen zu erzielen, können die hochgebogenen Wandungsteile wechselweise tangential in die eine und in die andere Umfangsrichtung weisen.

Weitere herstellungstechnische Vorteile werden erzielt, wenn die erfindungsgemässen Siebhülsen nach einem weiteren Vorschlag der Erfindung durch ein Verfahren derart hergestellt werden, dass das Drahtgewebe in einem ersten, vor der Formgebung durch Biegen stattfindenden Verfahrensschritt einem Walzvorgang unterzogen wird, bei dem die Knotenpunkte des Drahtgewebes auf 60 bis 90%, vorzugsweise 75 bis 80%, der ursprünglichen Höhe gestaucht werden. Diese Stauchung bewirkt, dass die Maschendrähte des Drahtgewebes in den Knotenpunkten gegenseitig formschlüssig festgelegt sind, so dass einerseits das Ablösen randnaher Maschendrähte des Zuschnittes unterbunden wird, und andererseits beim Biegevorgang der Siebhülse der Biegung entgegenwirkende Federungskräfte nicht auftreten. Hinzu kommt eine durch den Walzvorgang eintretende Flächenvergrösserung des Drahtgewebes von etwa 20 bis 40%, was entsprechende Materialeinsparungen erlaubt. Das Verbinden der Stossstellen des Zuschnittes nach dem Biegevorgang kann dank der verfahrensgemäss erzielten Lagefixierung der randnahen Maschendrähte durch geringfügiges Überlappen und anschliessendes Stauchen erfolgen. Gesonderte Verbindungsmittel, wie Lote und dergleichen, erübrigen sich somit.

Die Erfindung wird nachstehend anhand einer Zeichnung, die Ausführungsbeispiele einer erfindungsgemässen Siebhülse sowie Ausbildungsdetails wiedergibt, näher erläutert. Es zeigen:

Fig. 1 eine Siebhülse in perspektivischer Darstellung;

Fig. 2 einen vergrösserten Längshalbschnitt durch einen gegenüber der Fig. 1 abweichend ausgebildeten Flanschbereich;

Fig. 3 einen vergrösserten Längshalbschnitt durch einen weiteren gegenüber der Fig. 1 abweichend ausgebildeten Flanschbereich;

Fig. 4 einen vergrösserten Längshalbschnitt durch einen weiteren gegenüber der Fig. 1 abweichend ausgebildeten Flanschbereich;

Fig. 5 die vergrösserte Ansicht eines der Herstellung der Siebhülsen dienenden Drahtgewebes;

Fig. 6 einen Schnitt durch das Drahtgewebe nach Fig. 5 gemäss Schnittverlauf VI-VI, vor einem Walzvorgang;

Fig. 6a einen Schnitt durch das Drahtgewebe nach Fig. 5 gemäss Schnittverlauf VI-VI, nach einem Walzvorgang.

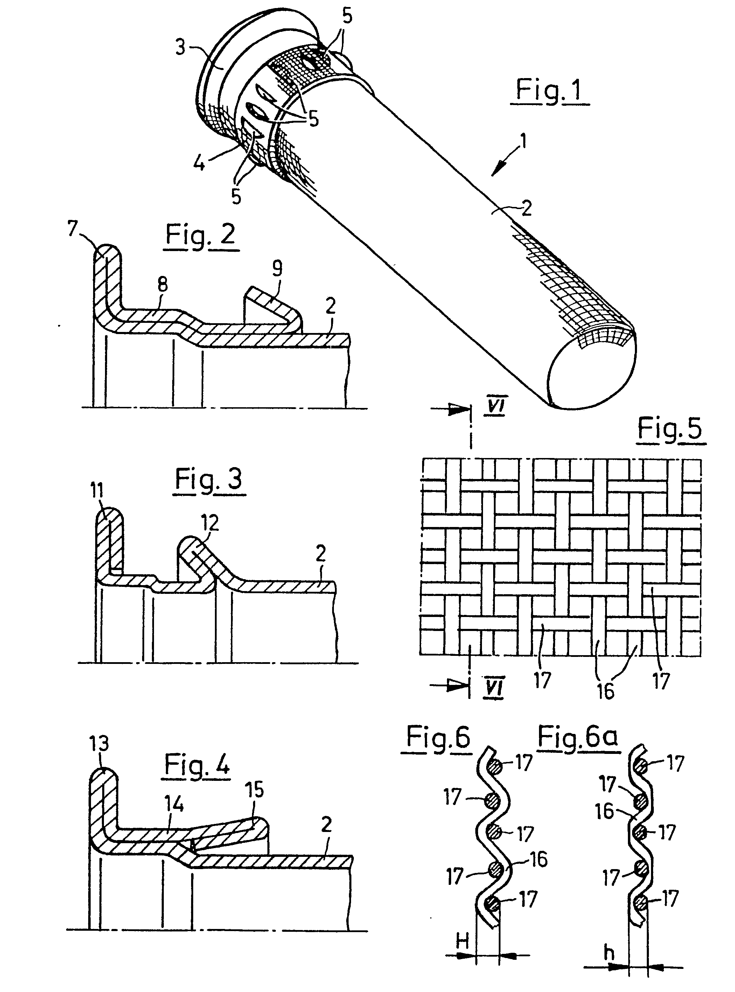

Die in Fig. 1 insgesamt mit 1 bezeichnete Siebhülse ist einteilig ausgeführt und besteht aus Drahtgewebe. An einem hohlzylindrischen einführrichtungsseitig geschlossenen Schaft 2 ist am gegenüberliegenden Ende ein als umlaufende Schulter ausgebildeter Flansch 3 angeordnet. Vom Flansch 3 her ist der Schaft 2 über etwa 10% der Länge des Schaftes 2 von einer zweiten Lage 4 Drahtgewebe umschlossen. Aus der zweiten Lage 4 sind über den Umfang verteilt Rippen in Form von hochgebogenen Wandungsteilen vorgesehen. Die Rippen 5 ragen tangential von der Aussenkontur des Schaftes 2 bzw. der zweiten Lage 4 ab und weisen abwechselnd in die eine und in die andere Umfangrichtung.

In Fig. 2 ist andeutungsweise der Schaft 2 gemäss Fig. 1 erkennbar. An diesen schliesst ein normal zur Längsachse die Aussenkontur überragender Flansch 7 an, dessen Material in eine zweite den Schaft 2 umschliessende Lage 8 von Drahtgewebe übergeht. Die Randzone der zweiten Lage 8 ist entgegen der Einführrichtung zu einem umlaufenden Wulst 9 gebogen.

In Fig. 3 ist wiederum der Schaft 2 und ein durch Bördelung geschaffener Flansch 11 erkennbar. In dem dem Flansch 11 benachbarten Bereich ist der Schaft 2 von einem entgegen der Einführrichtung zunehmend abstehenden Wulst 12 umragt, der durch Faltung eines axialen Abschnittes des Schaftes 2 gebildet ist.

Die Fig. 4 zeigt den Schaft 2 mit einem Flansch 13 und einer zweiten, den Schaft 2 umlaufenden Lage 14 von Drahtgewebe. Die Randzone der zweiten Lage 14 ist nach innen und entgegen der Einführrichtung gefaltet, so dass wiederum ein die Aussenkontur des Schaftes 2 überragender umlaufender Wulst 15 besteht.

Das in Fig. 5 dargestellte Drahtgewebe besteht aus an sich runden, zueinander kreuzförmig angeordneten Drähten 16, 17. Die Fig. 6 verdeutlicht das wellenförmige, wechselseitige Unterfassen der Drähte 16, 17. Nach dem Webevorgang entspricht die Höhe H der Knotenpunkte des Drahtgewebes dem Zweifachen des Drahtdurchmessers. Zur Erzielung von Verarbeitungsvorteilen des Drahtgewebes als auch zur Materialersparnis wird das Drahtgewebe vor der Erstellung des Zuschnittes für die Siebhülsen 1 einem Walzvorgang unterzogen. Dabei werden die Drähte 16, 17 in den Knotenpunkten aussenseitig angeflacht — siehe Fig. 6a — wobei die Höhe h in den Knotenpunkten nunmehr etwa 80% der ursprünglichen Höhe H entspricht. Das dieserart behandelte Drahtgewebe lässt sich problemlos, d.h. ohne dass nennenswerte Rückverformungskräfte aufteten, Biegevorgängen unterziehen.

## Patentansprüche

1. Siebhülse zur Aufnahme von mittels aushärtender Massen befestigbaren Verankerungselementen, aus Drahtgewebe, mit einem einführrichtungsseitig geschlossenen Schaft und einem den Durchmesser des Schaftes überragenden Flansch am gegenüberliegenden offenen Ende, dadurch gekennzeichnet, dass der dem Flansch (3, 7, 11, 13) benachbarte Bereich des Schaftes (2) die Aussenkontur des Schaftes (2) überragende Vorsprünge (5, 9, 12, 15) aus Drahtgewebe aufweist.

2. Siebhülse nach Anspruch 1, dadurch gekennzeichnet, dass die Vorsprünge (5, 9, 12, 15) einstückig mit dem Schaftbereich (2) verbunden sind.

3. Siebhülse nach Anspruch 1 oder 2, dadurch gekennzeichnet, dass die Vorsprünge durch einen durch Faltung gebildeten Wulst (9, 12, 15) geschaffen sind.

4. Siebhülse nach Anspruch 1 oder 2, dadurch gekennzeichnet, dass die Vorsprünge als axial verlaufende Rippen (5) ausgebildet sind.

5. Siebhülse nach Anspruch 4, dadurch gekennzeichnet, dass die Rippen (5) durch hochgebogene Wandungsteile gebildet sind.

6. Verfahren zur Herstellung von Siebhülsen nach einem der Ansprüche 1 bis 5, dadurch gekennzeichnet, dass das Drahtgewebe in einem ersten, vor der Formgebung durch Biegen stattfindenden Verfahrensschritt einem Walzvorgang unterzogen wird, bei dem die Knotenpunkte des Drahtgewebes auf 60 bis 90% der ursprünglichen Höhe (H) gestaucht werden.

## Claims

1. Meshed plug, made of wire gauze, for receiving anchoring elements fastenable by means of hardening substances, having a closed shaft on the introduction-direction side and a flange which projects beyond the diameter of the shaft at the opposite open end, characterised in that the region of the shaft (2) adjacent to the flange (3, 7, 11, 13) has projections (5, 9, 12, 15) made of wire gauze which project beyond the outer contour of the shaft (2).

2. Meshed plug according to claim 1, characterised in that the projections (5, 9, 12, 15) are connected in one piece to the shaft region (2).

3. Meshed plug according to claim 1 or 2, characterised in that the projections are created by a bead (9, 12, 15) formed by folding.

4. Meshed plug according to claim 1 or 2, characterised in that the projections are fashioned as axially extending ribs (5).

5. Meshed plug according to claim 4, characterised in that the ribs (5) are formed by bent-up wall parts.

6. Method of producing meshed plugs according to one of the claims 1 to 5, characterised in that the wire gauze is subjected, in a first method step taking place prior to the shaping by bending, to a rolling process in which the junction points of the wire gauze are compressed to 60 to 90% of the original height (H).

## Revendications

1. Douille en forme de tamis destinée à recevoir des éléments d'ancrage fixés au moyen de masses durcissables en tissu métallique, avec une tige fermée du côté introduction et, à l'extrémité opposée ouverte, une bride qui dépasse le diamètre de la tige, caractérisée en ce que, au voisinage de la bride (3, 7, 11, 13), la région de la tige (2) présente des portées (5, 9, 12, 15) en tissu métallique en saillie par rapport au contour extérieur de la tige (2).

2. Douille en forme de tamis selon la revendication 1, caractérisée en ce que les parties en saillie (5, 9, 12, 15) sont réliées en une seule pièce avec la région de la tige (2).

3. Douille en forme de tamis selon l'une des revendications 1 ou 2, caractérisée en ce que les parties en saillie sont constituées par un bourrelet (9, 12, 15) formé par pliage.

4. Douille en forme de tamis selon lune des revendications 1 ou 2, caractérisée en ce que les parties en saillie sont conformées en nervures (5) qui s'étendent dans le sens axial.

5. Douille en forme de tamis selon la revendication 4, caractérisée en ce que les nervures (5) sont constituées par des éléments de paroi repliés vers le haut.

6. Procédé de fabrication de douilles en forme de tamis selon l'une quelconque des revendications 1 à 5, caractérisé en ce que, dans une première phase opératoire précédant la conformation par pliage, le tissu métallique est soumis à une opération de laminage au cours de laquelle les points nodaux du tissu métallique sont comprimés à 60 à 90% de la hauteur initiale (H).

Fig. 1

Fig. 2

Fig. 3

Fig. 4

Fig. 5

Fig. 6

Fig. 6a